# EUROPEAN PATENT APPLICATION

(11) **EP 4 110 013 A1**
(43) Date of publication of application: **28.12.2022**
(21) Application number: 21756927.6
(22) Date of filing: 14.01.2021
(51) Int. Cl.: H05B 6/68, F24C 7/02, F24C 7/04

(54) **HEATING COOKER, CONTROL DEVICE, AND CONTROL METHOD**

(30) Priority: 20.02.2020 JP 2020026846
(71) Applicant: Panasonic Intellectual Property Management Co., Ltd., Osaka-shi, Osaka 540-6207 (JP)
(72) Inventor: TANIGUCHI, Naoya, Osaka-shi, Osaka 540-6207 (JP)
(74) Representative: SSM Sandmair
(86) International application number: PCT/JP2021/000957
(87) International publication number: WO 2021/166499

(57) **Abstract**

A heating cooker includes a heating chamber, an imaging device, a heating device, and control device (300). Control device (300) includes captured image acquisition unit (302), heating information acquisition unit (303), heating controller (307), and state detector (304). Captured image acquisition unit (302) acquires an image captured by the imaging device. Heating information acquisition unit (303) acquires heating information by referring to the image of a heating target acquired. Heating controller (307) controls the heating device according to the heating information. State detector (304) detects presence or absence of the heating target in the heating chamber or removal of the heating target from the heating chamber by referring to the image captured. Heating information acquisition unit (303) acquires the heating information when state detector (304) detects absence of the heating target in the heating chamber or removal of the heating target from the heating chamber.

## Description

### Technical Field

The present disclosure relates to a heating cooker for heating a heating target, and a control device and a control method for controlling the heating cooker.

### Background Art

A heating cooker disclosed in PTL 1, for example, reads an information code provided on a food container with a reader to heat food according to heating information that has been read. This reader is disposed at an upper part of a door covering an opening of a heating chamber of the heating cooker.

The heating cooker disclosed in PTL 1 does not read the information code for a predetermined time when opening of the door is detected for the first time after starting heating. This avoids reading of the information code at taking out heated food from the heating chamber. As a result, a faulty operation of the heating cooker according to the information is avoidable.

### Citation List

### Patent Literature

PTL 1: WO 2019/198274

### Summary of Invention

Food retail shops typically selling lunch boxes, such as convenience stores, receive numerous visitors in a short period during lunch time. Therefore, these retail shops need to provide heated food quickly. However, a heating cooker disclosed in PTL 1 cannot read heating information of next food for a predetermined time after heating the food and opening the door.

This predetermined time is set to a length sufficient for inexperienced salespersons to take out heated food. Therefore, skilled salespersons feel the predetermined time long.

When each salesperson gets used to the work, an exchange work of replacing heated food with food to be heated becomes a rate-determining step of the entire work, due to this predetermined time. In other words, efficiency of the entire work cannot be improved beyond the rate-determining step.

The present disclosure is invented under the circumstances, and aims to improve the convenience of the heating cooker.

An exemplary embodiment of the present disclosure is a heating cooker. The heating cooker in the exemplary embodiment includes a heating chamber having an opening, an imaging device for capturing an image inside the heating chamber, a heating device for heating a heating target placed in the heating chamber, and a control device.

The control device includes a captured image acquisition unit, a heating information acquisition unit, a heating controller, and a state detector.

The captured image acquisition unit acquires the image captured by the imaging device. The heating information acquisition unit acquires the heating information by referring to the image acquired by the captured image acquisition unit.

The heating controller controls the heating device according to the heating information. The state detector refers to the image captured by the imaging device to detect presence or absence of the heating target in the heating chamber or removal of the heating target from the heating chamber.

The heating information acquisition unit acquires the heating information when the state detector detects that there is no heating target inside the heating chamber or that the heating target has been taken out from the heating chamber.

Another exemplary embodiment of the present invention is a control device that controls the heating cooker including the heating chamber, the imaging device for capturing an image inside the heating chamber, and the heating device for heating the heating target placed inside the heating chamber.

The control device in the exemplary embodiment includes the captured image acquisition unit, the heating information acquisition unit, the heating controller, and the state detector.

The captured image acquisition unit acquires the image captured by the imaging device. The heating information acquisition unit refers to the image captured by the captured image acquisition unit to acquire the heating information.

The heating controller controls the heating device according to the heating information. The state detector refers to the image captured by the imaging device to detect presence or absence of the heating target in the heating chamber or removal of the heating target from the heating chamber.

The heating information acquisition unit acquires the heating information when the state detector detects that there is no heating target inside the heating chamber or that the heating target has been taken out from the heating chamber.

Still another exemplary embodiment of the present disclosure is a control method of controlling the heating cooker equipped with the heating chamber, the imaging device for capturing an image inside the heating chamber, and a heating device for heating the heating target placed inside the heating chamber.

The control method in the exemplary embodiment includes the steps of acquiring the image captured by the imaging device, heating information by referring to the captured image, and controlling the heating device according to the heating information.

The control method in the exemplary embodiment further includes the step of detecting presence or absence of the heating target in the heating chamber or removal of the heating target from the heating chamber by referring to the image captured by the imaging device.

The heating information is acquired in the step of acquiring the heating information when absence of the heating target inside the heating target or removal of the heating target from the heating chamber is detected in the detection step.

The technology of the present disclosure is capable of improving the convenience of the heating cooker.

### Brief Description of Drawings

Fig. 1 is an appearance view of a heating cooker in accordance with an exemplary embodiment of the present disclosure.
Fig. 2 is a schematic sectional view of the heating cooker in accordance with the exemplary embodiment.
Fig. 3 is a configuration of a control device in accordance with the exemplary embodiment.
Fig. 4 is a flow chart illustrating a control method in accordance with the exemplary embodiment.
Fig. 5 is a flow chart illustrating the control method in accordance with the exemplary embodiment.
Fig. 6 is a flow chart illustrating the control method in accordance with the exemplary embodiment.
Fig. 7A is an example of an image inside a heating chamber captured by an imaging device.
Fig. 7B is another example of the image inside the heating chamber captured by the imaging device.
Fig. 7C is an example of a differential image of two images inside the heating chamber captured by the imaging device.
Fig. 8A is an analysis result of the differential image in Fig. 7A.
Fig. 8B is an analysis result of the differential image in Fig. 7B.
Fig. 9 is a flow chart illustrating a control method in accordance with the exemplary embodiment.
Fig. 10 is a flow chart illustrating the control method in accordance with the exemplary embodiment.
Fig. 11A is an example of an image inside the heating chamber captured by the imaging device.
Fig. 11B is another image inside the heating chamber captured by the imaging device.
Fig. 11C is an example of a differential image of two images inside the heating chamber captured by the imaging device.

### Description of Embodiments

A heating cooker in an exemplary embodiment of the present disclosure automatically reads heating information when a heating target, such as food, is placed inside a heating chamber, and automatically heats the heating target according to the heating information that has been read. This heating information is information stored typically in a barcode attached to the heating target, and includes information such as a type of heating device, an output level of the heating device, heating time, and heating temperature.

The heating cooker in the exemplary embodiment stops reading the heating information after heating the heating target until the heated heating target is taken out from the heating chamber. When removal of the heating target from the heating chamber is detected, the heating cooker in the exemplary embodiment resumes reading the heating information. Thus, the user can start heating a next heating target immediately after taking out the heated heating target.

The heating cooker in the exemplary embodiment reads the heating information by an imaging device that is placed inside the heating chamber to capture an image inside the heating chamber. Therefore, there is no need of a reader to read the barcode attached to the heating target. An inexperienced user can thus quickly heat the heating target. As a result, work efficiency can be improved.

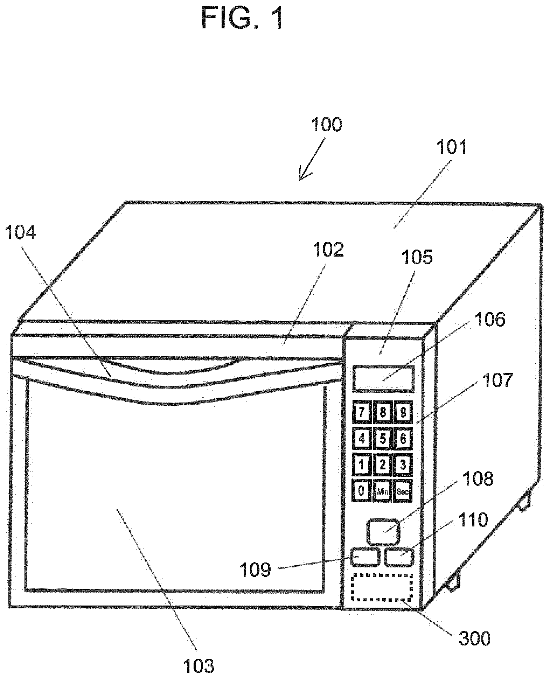

Fig. 1 is an appearance of heating cooker 100 in the exemplary embodiment of the present disclosure. Heating cooker 100 includes casing 101, door 102, and control panel 105. Door 102 covers an opening provided in a front frame that will be a front surface of casing 101. Control panel 105 is disposed on the right side of casing 101.

In the exemplary embodiment, the opening side, depth side, top surface side, and bottom side are simply referred to as front, back, top and bottom, respectively. When seen from the front, the left side and the right side of heating cooker 100 are simply referred to as left and right, respectively.

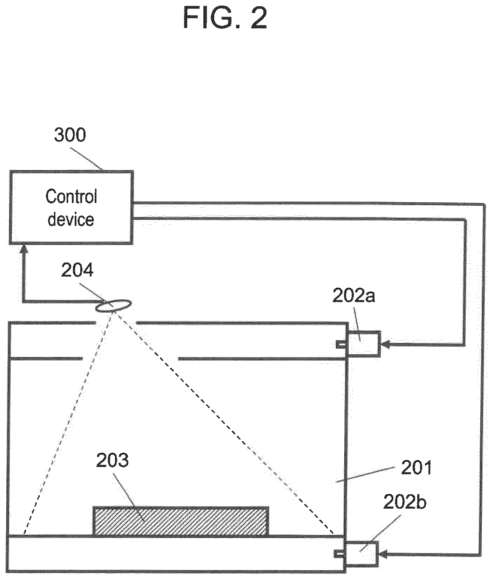

As illustrated in Fig. 1, door 102 is pivotally supported by casing 101 so as to rotate about a virtual horizontal shaft located at its bottom. Door 102 has glass window 103 for the user to confirm inside heating chamber 201 (Fig. 2). Door 102 has handle 104 on its front upper end.

When the user pulls handle 104, door 102 opens. When the user lifts handle 104, door 102 closes. An opening sensor for detecting opening and closing of door 102 is disposed on door 102 or casing 101. Information detected by the opening sensor is transmitted to control device 300.

Casing 101 has control panel 105 disposed on the front surface of heating cooker 100 on the right side of door 102. Control panel 105 has a plurality of operation switches and display 106. The plurality of switches include buttons 107, 109, and 110 for setting a range of pieces of information, such as cooking details and start button 108 for starting heating by the user.

Display 106 displays the operation state of heating cooker 100, an operation by the operation switch, and so on. Control device 300 controls the plurality of operation switches and the display. Control device 300 is configured with, for example, a microcomputer having a central processing unit (CPU) or hardware logic.

Fig. 2 schematically illustrates a cross section of heating cooker 100. As illustrated in Fig. 2, heating cooker 100 includes heating chamber 201 inside casing 101. Magnetron 202a and magnetron 202b that are the heating devices are disposed at the back of heating chamber 201.

Magnetrons 202a and 202b heat heating target 203 placed inside heating chamber 201 by emitting microwaves to inside heating chamber 201 from the top and bottom.

Heating cooker 100 may further includes another heating device that can be operated to heat heating target 203 by supplying steam into heating chamber 201. Control device 300 controls the heating devices such as magnetrons 202a and 202b.

Imaging device 204 for capturing an image inside heating chamber 201 is disposed at the top of heating chamber 201. An installation position, direction, and angle of view of imaging device 204 are set such that an area that heating target 203 can be placed inside heating chamber 201 is mostly captured.

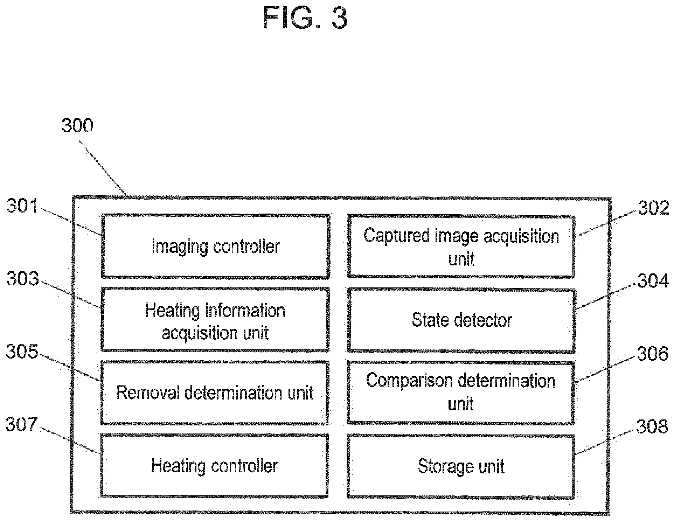

Fig. 3 illustrates a configuration of control device 300 of heating cooker 100 in the exemplary embodiment of the present disclosure. As illustrated in Fig. 3, control device 300 includes imaging controller 301, captured image acquisition unit 302, heating information acquisition unit 303, state detector 304, removal determination unit 305, comparison determination unit 306, heating controller 307, and storage unit 308.

Control device 300 actually includes a microcomputer including CPU and memory as hardware and a program stored in the memory as software. Each component of control device 300 illustrated in Fig. 3 is a functional block virtually configured by linking the hardware and software.

It is easily understood by a person skilled in the art that these functional blocks can be configured in various modes such as only by hardware or by a combination of hardware and software.

Imaging controller 301 controls capturing of an image inside heating chamber 201 by imaging device 204. Imaging controller 301 controls an imaging range, resolution, zoom magnification, and so on of imaging device 204 according to an instruction from outside.

Captured image acquisition unit 302 acquires the image captured by imaging device 204 from imaging device 204. Captured image acquisition unit 302 stores data of the image acquired in storage unit 308.

Heating information acquisition unit 303 reads heating information attached to heating target 203 from the image of heating target 203 captured by imaging device 204. Heating information acquisition unit 303 reads an image of heating target 203 (food) from storage unit 308, and reads the heating information also from the image.

State detector 304 refers to the image captured by imaging device 204 to detect presence or absence of heating target 203 in heating chamber 201 or removal of heating target 203 from heating chamber 201.

When door 102 is opened, heating information acquisition unit 303 does not acquire the heating information until state detector 304 detects absence of heating target 203 in heating chamber 201 or removal of heating target 203 from heating chamber 201.

When state detector 304 detects the absence of heating target 203 inside heating chamber 201 or the removal of heating target 203 from heating chamber 201, heating information acquisition unit 303 acquires the heating information.

Accordingly, wasteful acquisition of the heating information can be suppressed. As a result, power consumption can be reduced, and erroneous setting of the heating information of heating target 203 previously placed inside heating chamber 201 can be suppressed.

Removal determination unit 305 refers to the image captured by imaging device 204 to determine whether heating target 203 in heating chamber 201 has been taken out. A determination process is detailed later.

Comparison determination unit 306 refers to the image captured by imaging device 204 to determine whether heating target 203 is present in heating chamber 201. The determination process is detailed later.

Heating controller 307 makes the heating device such as magnetrons 202a and 202b to heat heating target 203 according to the heating information acquired by heating information acquisition unit 303. When the heating information is not set, heating controller 307 controls the heating device according to a heating condition received from control panel 105.

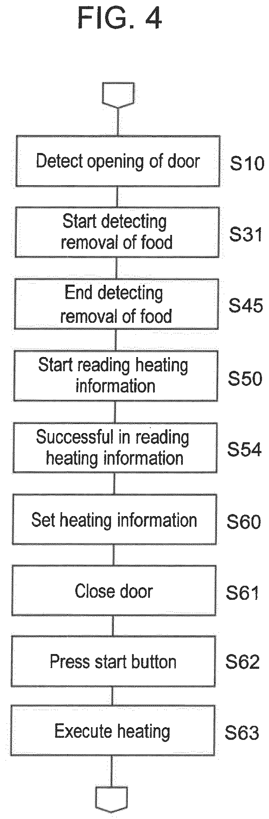

Fig. 4 is a flow chart illustrating a control method in accordance with the exemplary embodiment. In particular, Fig. 4 illustrates a procedure after heating target 203 is heated, i.e., the state that heating target 203 is present in heating chamber.

As shown in Fig. 4, when opening of door 102 is detected (Step S10), state detector 304 starts detecting removal of heating target 203 (Step S31). Until removal of heated heating target 203 is detected, heating information acquisition unit 303 does not read the heating information. A removal detection process is detailed later.

When state detector 304 detects removal of heating target 203 (Step S45), heating information acquisition unit 303 starts reading the heating information (Step S50). When door 102 is closed before successfully reading the heating information, heating target 203 may not be placed inside heating chamber 201 or heating target 203 without heating information may be placed inside heating chamber 201. Therefore, heating information acquisition unit 303 may stop reading the heating information.

When new heating target 203 with heating information is placed inside heating chamber 201 and heating information acquisition unit 303 successfully reads the heating information (Step S54), heating controller 307 sets heating information that has been read as the heating information to be used (Step S60). When door 102 is closed (Step S61) and start button 108 is pressed (Step S62), heating controller 307 executes heating according to the heating information to be used (Step S63).

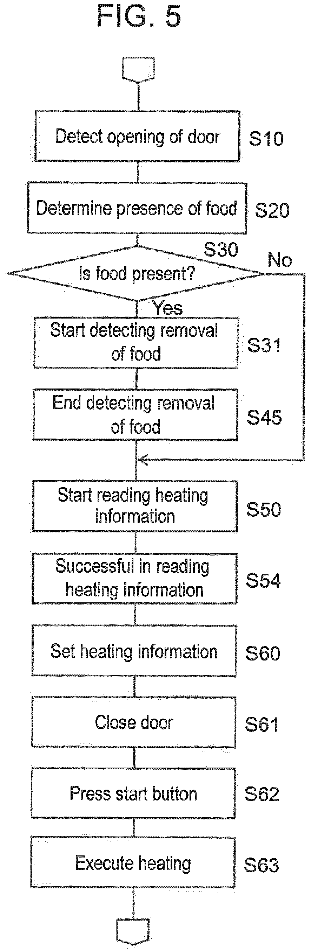

Fig. 5 is a flow chart illustrating the control method in accordance with the exemplary embodiment. In particular, Fig. 5 illustrates a procedure when presence of heating target 203 in heating chamber 201 is unknown.

As shown in Fig. 5, when opening of door 102 is detected (Step S10), state detector 304 determines presence of heating target 203 in heating chamber 201 (Step S20). When there is no heating target 203 (food) in heating chamber 201 (No in Step S30), new heating target 203 may be put inside heating chamber 201. Therefore, heating information acquisition unit 303 starts reading the heating information (Step S50).

When heating target 203 is present in heating chamber 201 (Yes in Step S30), heating target 203 may be already heated. Therefore, heating information acquisition unit 303 does not read the heating information until removal of heating target 203 is detected. State detector 304 starts detecting removal of heated heating target 203 (Step S31). The removal detection process is detailed later.

When state detector 304 detects removal of heating target 203 (Step S45), heating information acquisition unit 303 starts reading the heating information (Step S50).

When door 102 is closed before successfully reading the heating information, heating target 203 may not be placed inside heating chamber 201 or heating target 203 without heating information may be placed inside heating chamber 201. Therefore, heating information acquisition unit 303 may stop reading the heating information.

When new heating target 203 with heating information is placed inside heating chamber 201 and heating information acquisition unit 303 successfully reads the heating information (Step S54), heating controller 307 sets heating information that has been read as the heating information to be used (Step S60).

When door 102 is closed (Step S61) and start button 108 is pressed (Step S62), heating controller 307 executes heating according to the heating information to be used (Step S63).

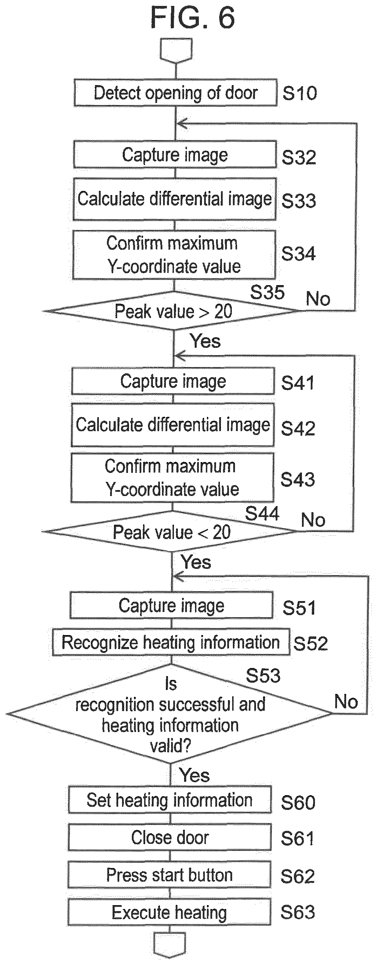

Fig. 6 is a flow chart illustrating the control method in accordance with the exemplary embodiment. In particular, Fig. 6 further details the procedure for detecting removal of heating target 203 and the procedure for reading the heating information.

As shown in Fig. 6, when opening of door 102 is detected (Step S10), state detector 304 starts detecting removal of heating target 203.

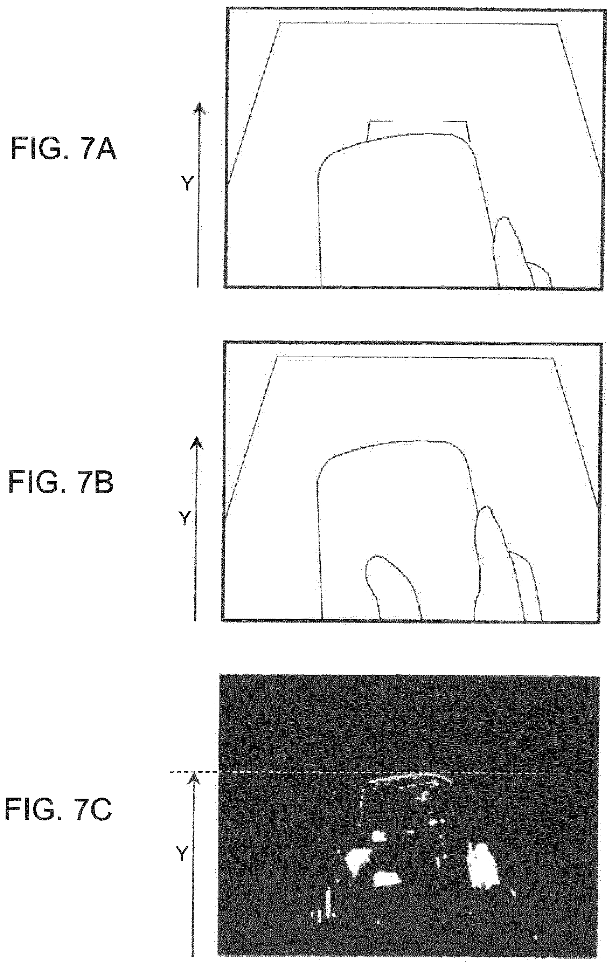

Fig. 7A is an image inside heating chamber 201 captured by imaging device 204. Fig. 7B is an image of a next frame.

When the user takes out heating target 203 from heating chamber 201, the user's hand and heating target 203 are included in the image inside heating chamber 201. Fig. 7C is a differential image of two images in Fig. 7A and Fig. 7B.

As illustrated in Fig. 7A and Fig. 7B, when the user removes heating target 203 from heating chamber 201 or places heating target 203 inside heating chamber 201, the user's hand and heating target 203 move along a Y axis in the captured image.

In other words, as illustrated in Fig. 7C, a pixel having the largest Y coordinate, in pixels whose differential values are other than zero in the differential image, corresponds to a position of a tip of the user's hand or heating target 203. Accordingly, the maximum Y-coordinate value in the pixels whose differential values are other than zero in the differential image shows a degree of insertion of the user's hand or heating target 203 into heating chamber 201. Hereinafter, the maximum Y-coordinate value in the pixels whose differential values are other than zero in the differential image is simply referred to as the maximum Y-coordinate value.

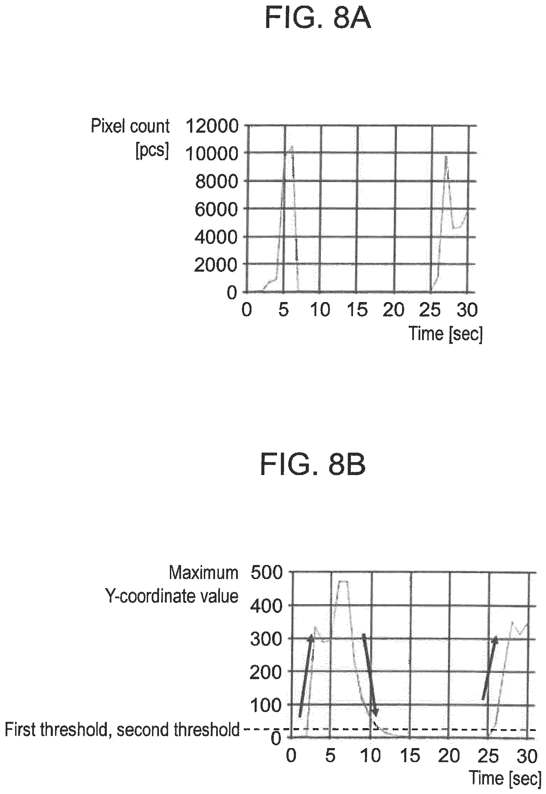

Fig. 8A and Fig. 8B show analysis results of the differential image illustrated in Fig. 7C. Fig. 8A shows a temporal change of the number of pixels whose differential values are other than zero in the differential image in Fig. 7C. As shown in Fig. 8A, the change of the number of pixels whose differential values are other than zero corresponds to movement of the user's hand.

Fig. 8B shows a temporal change of the maximum Y-coordinate value in Fig. 7C. As shown in Fig. 8B, the maximum Y-coordinate value increases as the user's hand is inserted into heating chamber 201, and then decreases as the user removes heating target 203 from heating chamber 201.

Accordingly, when the maximum Y-coordinate value exceeds a first threshold and then becomes lower than a second threshold, removal determination unit 305 determines that the user has taken out heating target 203 from heating chamber 201.

The first threshold is, for example, a Y-coordinate value corresponding to the minimum depth that the user needs to insert the hand to take out heating target 203 placed inside heating chamber 201. The second threshold is, for example, a Y-coordinate value corresponding to a position on the most front side in an imaging range of imaging device 204. The first threshold and the second threshold may be specified in advance typically based on experiments, or may be changeable manually by the user or via external communication.

State detector 304 gives an instruction to imaging controller 301 to capture an image inside heating chamber 201 (Step S32). Captured image acquisition unit 302 acquires the image inside heating chamber 201 captured by imaging device 204 from imaging device 204, and stores the image in storage unit 308.

Returning to Fig. 6, removal determination unit 305 compares the image acquired by captured image acquisition unit 302 and an image of a previous frame stored in storage unit 308 to calculate a differential image (Step S33). Removal determination unit 305 confirms the maximum Y-coordinate value (Step S34).

Until the maximum Y-coordinate value exceeds the first threshold (20 in the example in Fig. 6) (No in Step S35), processes in Steps S32 to S34 are repeatedly executed.

When the maximum Y-coordinate value exceeds the first threshold (Yes in Step S35), removal determination unit 305 confirms that heating target 203 has been taken out from heating chamber 201.

State detector 304 gives an instruction to imaging controller 301 to capture an image inside heating chamber 201 (Step S41). Captured image acquisition unit 302 acquires the image inside heating chamber 201 captured by imaging device 204 from imaging device 204, and stores the image in storage unit 308.

Removal determination unit 305 compares the image acquired by captured image acquisition unit 302 and an image of the previous frame stored in storage unit 308 to calculate a differential image (Step S42). Removal determination unit 305 confirms the maximum Y-coordinate value (Step S43).

Until the maximum Y-coordinate value becomes lower than the second threshold (20 in the example in Fig. 6) (No in Step S44), processes in Steps S41 to S43 are repeatedly executed. When the maximum Y-coordinate value becomes lower than the second threshold (Yes in Step S44), heating information acquisition unit 303 starts reading the heating information.

Heating information acquisition unit 303 gives an instruction to imaging controller 301 to capture an image inside heating chamber 201 (Step S51). Captured image acquisition unit 302 acquires the image inside heating chamber 201 captured by imaging device 204 from imaging device 204, and stores the image in storage unit 308.

Heating information acquisition unit 303 recognizes the heating information of heating target 203 in the image acquired (Step S52). When heating information acquisition unit 303 fails to recognize the heating information or when the recognized heating information is invalid (No in Step S53), processes in Steps S51 and S52 are executed again.

When heating information acquisition unit 303 successfully recognizes valid heating information (Yes in Step S53), heating controller 307 sets the heating information that has been read as the heating information to be used (Step S60). When door 102 is closed (Step S61) and start button 108 is pressed (Step S62), heating controller 307 executes heating according to the heating information to be used (Step S63).

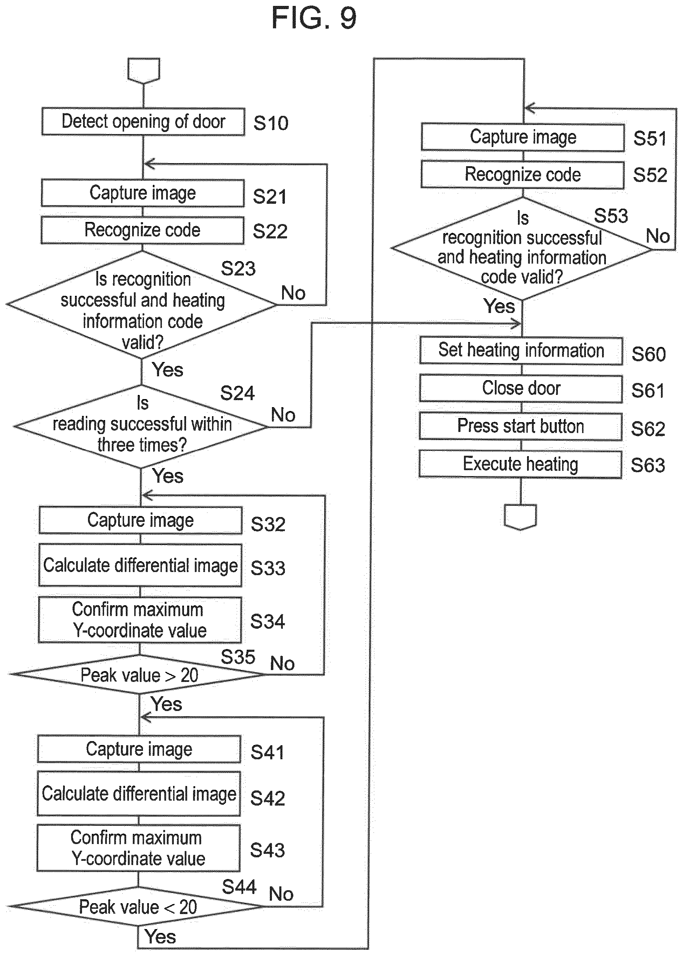

Fig. 9 is a flow chart illustrating the control method in accordance with the exemplary embodiment. In particular, Fig. 9 further details the procedure for determining presence of heating target 203 in heating chamber 201 in the procedure illustrated in Fig. 5.

As illustrated in Fig. 9, when opening of door 102 is detected (Step S10), state detector 304 determines whether heating target 203 is present inside heating chamber 201. Heating information acquisition unit 303 gives an instruction to imaging controller 301 to capture an image inside heating chamber 201 (Step S21). Captured image acquisition unit 302 acquires the image inside heating chamber 201 captured by imaging device 204 from imaging device 204, and stores the image in storage unit 308.

Heating information acquisition unit 303 recognizes the heating information of heating target 203 in the image acquired (Step S22). When heating information acquisition unit 303 fails to recognize the heating information or when the recognized heating information is invalid (No in Step S23), processes in Steps S21 and S22 are executed again.

When heating information acquisition unit 303 successfully recognizes valid heating information (Yes in Step S23), there are the next two possibilities. One is the case that the heating information of heating target 203 already present in heating chamber 201 before opening door 102 has been read. The other is the case that the heating information of heating target 203 placed inside heating chamber 201 after opening door 102 is read.

When the heating information after opening door 102 is successfully read within a predetermined number of times (three in the example in Fig. 9) (Yes in Step S24), there is a possibility that the heating information of heating target 203 already present in heating chamber 201 before opening door 102 has been read. In other words, heating target 203 in the heating chamber may be heating target 203 that has already been heated.

Therefore, when removal of heating target 203 is detected (Steps S32 to S44) and the heating information of heating target 203 newly placed inside heating chamber 201 is read (Steps S51 to S53), heating controller 307 sets the heating information that has been read as the heating information to be used (Step S69). Details of Steps S32 to S44 and Steps S51 to S53 are same as that in Fig. 6.

When the heating information is recognized for a predetermined number of times or more after door 102 is opened, and the heating information is successfully read (No in Step S24), the heating information of heating target 203 placed inside heating chamber 201 after door 102 is opened has possibly been read. Therefore, heating controller 307 sets this heating information that has been read as the heating information to be used (Step S60).

When door 102 is closed (Step S61) and start button 108 is pressed (Step S62), heating controller 307 executes heating according to the heating information to be used (Step S63).

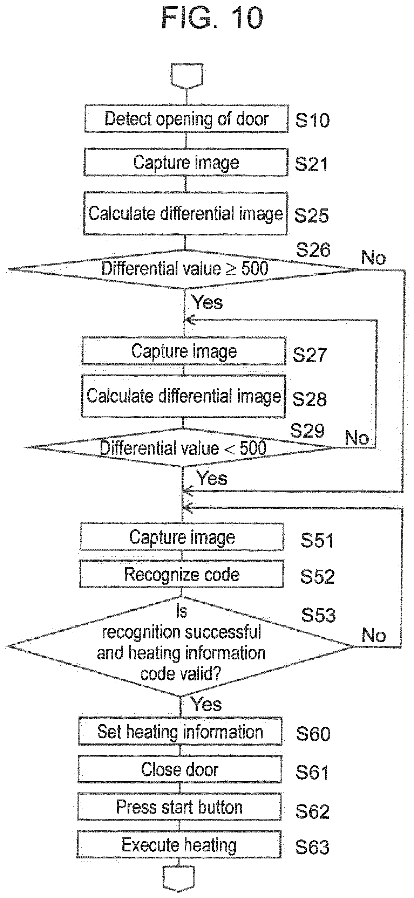

Fig. 10 is a flow chart illustrating the control method in accordance with the exemplary embodiment. In particular, Fig. 10 further details the procedure for determining presence of heating target 203 in heating chamber 201 in the procedure illustrated in Fig. 5.

As shown in Fig. 10, when opening of door 102 is detected (Step S10), state detector 304 determines whether heating target 203 is present in heating chamber 201.

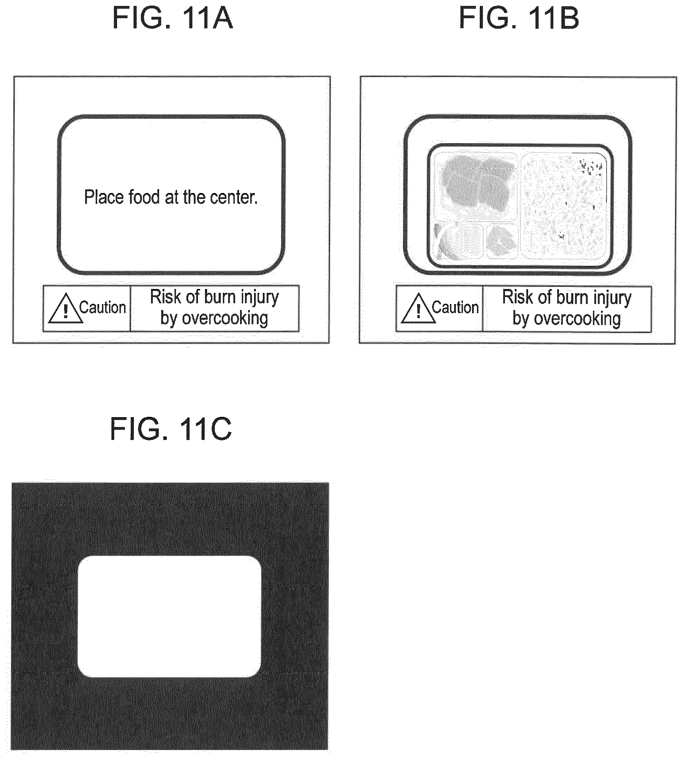

Fig. 11A is an image inside heating chamber 201 captured by imaging device 204 in a state heating target 203 is not placed inside heating chamber 201 (hereinafter referred to as an initial chamber image). Fig. 11B is an image inside heating chamber 201 captured by imaging device 204 in a state heating target 203 is placed inside heating chamber 201.

Fig. 11C is a binary differential image between two images in Fig. 11A and Fig. 11B. Whether heating target 203 is present in heating chamber 201 can be determined based on the shape and size of an object in the differential image and the number of differential pixels. The number of differential pixels is the number of pixels having values other than zero in the differential image.

Returning to Fig. 10, state detector 304 gives an instruction to imaging controller 301 to capture an image inside heating chamber 201 (Step S21. Captured image acquisition unit 302 acquires the image inside heating chamber 201 captured by imaging device 204 from imaging device 204, and stores the image in storage unit 304. Comparison determination unit 306 calculates a differential image between the image inside the chamber acquired and the initial chamber image stored in storage unit 308 (Step S25) to confirm the number of differential pixels.

When the number of differential pixels is less than a predetermined value (500 in the example in Fig. 10) (No in Step S26), comparison determination unit 306 determines that there is no heating target 203 inside heating chamber 201. Then, heating information acquisition unit 303 starts reading the heating information (Steps S51 to S53). Details of the procedure for reading the heating information are the same as that in Fig. 5.

When the number of differential pixels is not less than the predetermined value (Yes in Step S26), comparison determination unit 306 determines that heating target 203 is present in heating chamber 201. However, this heating target 203 may be already present in heating chamber 201 before opening door 102 and already heated. Therefore, heating information acquisition unit 303 stops reading the heating information until heating target 203 is taken out from heating chamber 201.

State detector 304 gives an instruction to imaging controller 301 to capture an image inside heating chamber 201 (Step S27). Captured image acquisition unit 302 acquires the image inside heating chamber 201 captured by imaging device 204, and stores the image in storage unit 308.

Comparison determination unit 306 calculates a differential image between the image inside the chamber acquired and the initial chamber image stored in storage unit 308 (Step S28). Comparison determination unit 306 confirms the number of differential pixels.

When the number of differential pixels is not less than the predetermined value (500 in the example in Fig. 10) (No in Step S29), comparison determination unit 306 determines that heating target 203 in heating chamber 201 has not been taken out. In this case, processes in Steps S27 and S28 are executed again.

When the number of differential pixels is less than the predetermined value (Yes in Step S29), heating target 203 in heating chamber 201 may be taken out. Therefore, heating information acquisition unit 303 starts reading the heating information (Steps S51 to S53). Details of the procedure for reading the heating information are same as that in Fig. 5.

Heating controller 307 sets the heating information read as the heating information to be used (Step S60). When door 102 is closed (Step S61) and start button 108 is pressed (Step S62), heating controller 307 executes heating according to the heating information to be used (Step S63).

Heating target 203 may be taken out before closing door 102 after heating target 203 is placed inside heating chamber 201 and the heating information is read.

Therefore, after start button 108 is pressed, comparison determination unit 306 confirms again whether heating target 203 is present in heating chamber 201. After confirming that heating target 203 is present, heating controller 307 executes heating. This can prevent empty heating without heating target 203 inside heating chamber 201.

Th above describes the present disclosure in accordance with the above exemplary embodiment. Various types of modifications to each component or each process in the above exemplary embodiment are available to the person skilled in the art, and it is apparent that the present disclosure includes these modifications.

In the exemplary embodiment, comparison determination unit 306 refers to the image inside heating chamber 201 captured by imaging device 204 to determine whether heating target 203 is present inside heating chamber 201. In other examples, a weight sensor disposed on the bottom of heating chamber 201 may be employed for determining whether heating target 203 is present inside heating chamber 201. Still more, a photo sensor, photoelectric sensor, ultrasonic sensor, laser sensor, and so on may be employed.

In the exemplary embodiment, imaging device 204 is disposed inside heating chamber 201. In other examples, imaging device 204 may be disposed on door 102 or near the opening of heating chamber 201.

An exemplary embodiment of the present disclosure is the heating cooker. The heating cooker in the exemplary embodiment includes the heating chamber with opening, the imaging device for capturing an image inside the heating chamber, and the control device for controlling heating of a heating target placed inside the heating chamber.

The control device includes the captured image acquisition unit, the heating information acquisition unit, the heating controller, and the state detector.

The captured image acquisition unit acquires the image captured by the imaging device. The heating information acquisition unit acquires the heating information by referring to the image acquired by the captured image acquisition unit.

The heating controller controls the heating device according to the heating information. The state controller refers to the image captured by the imaging device to detect presence or absence of the heating target in the heating chamber or removal of the heating target from the heating chamber.

When the state detector detects absence of heating target inside the heating chamber or removal of the heating target from the heating chamber, the heating information acquisition unit acquires the heating information. Accordingly, the exemplary embodiment can improve work efficiency and user's convenience.

When opening of the door covering the opening of the heating chamber is detected, the heating information acquisition unit does not acquire the heating information until absence of the heating target in the heating chamber or removal from the heating chamber of the heating target present in the heating chamber is detected. Accordingly, the exemplary embodiment can reduce power consumption.

The state detector detects movement of the user's hand or the heating target based on a plurality of images captured at different time points, so as to detect removal of the heating target from the heating chamber. Accordingly, the exemplary embodiment can improve the detection accuracy.

The state detector may also detect a temporal change of a difference of a plurality of images captured at different time points as the movement of the user's hand or the heating target. Accordingly, the exemplary embodiment can improve the detection accuracy.

When the user's hand or the heating target reaches a predetermined area inside the heating chamber and then reaches near the opening of the heating chamber, the state detector detects that the heating target has been taken out from the heating chamber. Accordingly, the exemplary embodiment can improve the detection accuracy.

The state detector compares an image without the heating target and the image acquired by the captured image acquisition unit to detect whether or not the heating target is present in the heating chamber. Accordingly, the exemplary embodiment can improve the detection accuracy.

When the heating information acquisition unit successfully acquires the heating information within a predetermined time from opening of the door covering the opening of the heating chamber, the state detector may detect presence of the heating target inside the heating chamber. Accordingly, the exemplary embodiment can improve the detection accuracy.

The imaging device may be arranged such that an area that the heating target can be placed in the heating chamber can be captured. Accordingly, the exemplary embodiment can improve the detection accuracy and also work efficiency.

Another exemplary embodiment of the present disclosure is the control device that controls the heating cooker including the heating chamber, imaging device that captures an image inside the heating chamber, and the heating device that heats the heating target placed inside the heating chamber.

The control device in the exemplary embodiment includes the captured image acquisition unit, the heating information acquisition unit, the heating controller, and the state detector.

The captured image acquisition unit acquires the image captured by the imaging device. The heating information acquisition unit acquires the heating information by referring to the image acquired by the captured image acquisition unit.

The heating controller controls the heating device according to the heating information. The state controller refers to the image captured by the imaging device to detect presence or absence of the heating target in the heating chamber or removal of the heating target from the heating chamber.

When the state detector detects that there is no heating target inside the heating chamber or that the heating target has been removed from the heating chamber, the heating information acquisition unit acquires the heating information. Accordingly, the exemplary embodiment can improve the work efficiency and the user's convenience.

Still another exemplary embodiment of the present disclosure is the control method of controlling the heating cooker including the heating chamber, the imaging device that captures an image inside the heating chamber, and the heating device that heats the heating target placed in the heating chamber.

The control method in the exemplary embodiment includes the steps of acquiring the image captured by the imaging device, acquiring the heating information by referring to the image acquired, and controlling the heating device according to the heating information.

The control method in the exemplary embodiment further includes the step of detecting presence or absence of the heating target in the heating chamber or removal of the heating target from the heating chamber by referring to the image captured by the imaging device.

In the detection step, when absence of the heating target in the heating chamber or removal of the heating target from the heating chamber is detected, the heating information is acquired in the step of acquiring the heating information. Accordingly, the exemplary embodiment can improve the work efficiency and user convenience.

### INDUSTRIAL APPLICABILITY

The technology of the present disclosure is applicable to consumer-use heating cookers in addition to business-use heating cookers.

### Reference marks in the drawings

- 100: Heating cooker
- 101: Casing
- 102: Door
- 103: Glass window
- 104: Handle
- 105: Control panel
- 106: Display
- 107: Button
- 108: Start button
- 201: Heating chamber
- 202a, 202b: Magnetron
- 203: Heating target
- 204: Imaging device
- 300: Control device
- 301: Imaging controller
- 302: Captured image acquisition unit
- 303: Heating information acquisition unit
- 304: State detector
- 305: Removal determination unit
- 306: Comparison determination unit
- 307: Heating controller
- 308: Storage unit

## Claims

1. A heating cooker comprising:
a heating chamber having an opening;
an imaging device operable to capture an image inside the heating chamber;
a heating device operable to heat a heating target placed inside the heating chamber; and
a control device,
wherein
the control device includes:
a captured image acquisition unit operable to acquire the image captured by the imaging device,
a heating information acquisition unit operable to acquire heating information by referring to the image acquired by the captured image acquisition unit, and
a heating controller operable to control the heating device according to the heating information, and
a state detector operable to detect presence or absence of the heating target in the heating chamber or removal of the heating target from the heating chamber by referring to the image captured by the imaging device, and
the heating information acquisition unit is operable to acquire the heating information when the state detector detects absence of the heating target in the heating chamber or removal of the heating target from the heating chamber.

2. The heating cooker according to claim 1, wherein
when opening of the door covering the opening of the heating chamber is detected, the heating information acquisition unit is operable not to acquire the heating information until the absence of the heating target in the heating chamber or the removal of the heating target present in the heating chamber from the heating chamber is detected.

3. The heating cooker according to claim 1 or 2, wherein
the state detector is operable to detect the removal of the heating target from the heating chamber by detecting movement of a user's hand or the heating target based on a plurality of the images captured at a plurality of different time points.

4. The heating cooker according to claim 3, wherein
the state detector is operable to detect a temporal change of a difference between the plurality of images captured at the plurality of different time points as the movement of the user's hand or the heating target.

5. The heating cooker according to claim 3 or 4, wherein
the state detector is operable to detect the removal of the heating target from the heating chamber when the user's hand or the heating target reaches near the opening of the heating chamber after the user's hand or the heating target reaches a predetermined area inside the heating chamber.

6. The heating cooker according to one of claims 1 to 5, wherein
the state detector is operable to detect whether or not the heating target is present in the heating chamber by comparing the image without the heating target and the image acquired by the captured image acquisition unit.

7. The heating cooker according to one of claims 1 to 5, wherein
the state detector is operable to detect the presence of the heating target in the heating chamber when the heating information acquisition unit successfully acquires the heating information within a predetermined time after the door covering the opening of the heating chamber is opened.

8. The heating cooker according to one of claims 1 to 7, wherein
the imaging device is disposed in a range that can capture an area where the heating target can be placed in the heating chamber.

9. A control device operable to control a heating cooker including a heating chamber, an imaging device operable to capture an image inside the heating chamber, and a heating device operable to heat a heating target placed inside the heating chamber, the control device comprising:
a captured image acquisition unit operable to acquire the image captured by the imaging device;
a heating information acquisition unit operable to acquire heating information by referring to the image captured by the captured image acquisition unit;
a heating controller operable to control the heating device according to the heating information; and
a state detector operable to detect presence or absence of the heating target in the heating chamber or removal of the heating target from the heating chamber by referring to the image captured by the imaging device,
wherein
the heating information acquisition unit is operable to acquire the heating information when the state detector detects absence of the heating target in the heating chamber or removal of the heating target from the heating chamber.

10. A control method of controlling a heating cooker including a heating chamber, an imaging device operable to capture an image inside the heating chamber, and a heating device operable to heat a heating target placed inside the heating chamber, the control method comprising:
acquiring the image captured by the imaging device;
acquiring heating information by referring to the image acquired;
controlling the heating device according to the heating information; and
detecting presence or absence of the heating target in the heating chamber or removal of the heating target from the heating chamber by referring to the image captured by the imaging device,
wherein
the heating information is acquired in the step of acquiring the heating information when absence of the heating target in the heating chamber or removal of the heating target from the heating chamber is detected in the step of detecting.
